# EUROPEAN PATENT APPLICATION

(11) **EP 1 014 023 A2**
(43) Date of publication of application: **28.06.2000**
(21) Application number: 99310251.6
(22) Date of filing: 20.12.1999
(51) Int. Cl.: F28C 1/12, F28F 25/00

(54) **Water cooling tower**

(30) Priority: 23.12.1998 GB 9828275
(71) Applicant: Watermiser Limited, Newmilns KA16 AJ (GB)
(72) Inventor: Cox, Richard, Darvel, Ayrshire KA17 0DB (GB)
(74) Representative: Murnane, Graham John

(57) **Abstract**

A cooling tower 1 for cooling a liquid coolant, comprising a cooling chamber through which droplets 12 of coolant fall, an air inlet communicating with the cooling chamber, an axial impeller fan 18 adapted to draw air through the air inlet into the chamber, and a barrier plate 40 positioned within the cooling tower adjacent to the air inlet. The barrier plate 40 is preferably dish-shaped or cone-shaped and its diameter is selected so that the barrier plate extends over the area of negative air velocity at the air inlet, in order to prevent droplets of coolant being drawn onto the hub 30 of the impeller and tracking along the impeller blades 31, where they can freeze and cause ice build up on the fan casing 20.

## Description

This invention relates to a water cooling tower of the sort used to dissipate heat from industrial plant such as air conditioning systems. In particular the invention relates to a water cooling tower of the sort in which water droplets at a higher temperature are allowed to fall through cooling tower packing within the tower while an electric fan drives a flow of air past the droplets of water thereby cooling the temperature of the droplets to a lower temperature.

Water cooling towers have been known for many years. They may be made from glass reinforced plastic (GRP) or other suitable materials, and are of a substantially box-type shape, generally open at the top. Water at a first temperature above the ambient air temperature is supplied via an inlet pipe to the top of the tower where a spray distribution system provides a uniform distribution of water droplets which fall under gravity towards the bottom of the cooling tower. At the bottom of the tower there is provided a graded basetank with underside drain. The water is collected from the drain and pumped out via an outlet pipe. An air inlet is provided in the side of the cooling tower near the basetank. An electric axial fan forces a draught by driving air at the ambient temperature into the cooling tower towards the opening at the top of the cooling tower. The air is driven upwards past the droplets, which are propelled downwards by gravity. The air cools the droplets so that the water in the outlet pipe is at a second temperature lower than the first temperature. Typically the first temperature may be 50°C and the second temperature may be 30°C.

However, prior art cooling towers suffer from a problem. The axial fan tends to collect water within the casing at the impeller blade tips when running. In winter this water can freeze, and can cause the blade tip to be bonded by ice formation to the fan casing, particularly when the fan is run continuously.

The problem occurs when cooling water droplets fall across the discharge face of the fan and are sucked onto the hub of the fan, at a region of negative pressure. These droplets track along the impeller blade under the action of centripetal force and build up on the fan casing at the blade tips.

It is an object of the present invention to overcome this problem.

According to the present invention there is provided a cooling tower for cooling a liquid coolant, comprising a cooling chamber, an air inlet communicating with said cooling chamber, droplet generation means for generating droplets of liquid coolant within said chamber, and an axial fan comprising an axial impeller hub and a plurality of blades, said fan being adapted to draw air through said air inlet into said chamber, and said cooling tower further comprising a barrier plate positioned within the cooling tower substantially on the axis of the axial fan adjacent to the air inlet.

Preferably said barrier plate is positioned centrally on the axis of said axial fan. Said barrier plate may be planar and positioned substantially perpendicularly to the axis of said axial fan. Said barrier plate may be dish shaped or cone shaped and positioned such that its axis of rotation is substantially perpendicular to the axis of said axial fan. Preferably the barrier plate is arranged such that the concave side of the dish or cone shape faces away from the fan. Preferably the barrier plate comprises a truncated cone subtending an angle of between 100° and 140°.

Preferably the cooling tower is provided with a canopy arranged adjacent to the air inlet and extending into said chamber. Preferably the canopy is a portion of a cylindrical wall. Preferably the portion subtends an arc greater than 180°. Preferably the canopy extends over the barrier plate. Preferably the canopy has the same diameter as the air inlet.

Preferably the barrier plate is fixed to the cooling tower wall or canopy by a plurality of fixing arms, most preferably three fixing arms, extending radially from the barrier plate. Preferably the arms comprise plate-like members arranged such that the planar side of the plate members is parallel to the direction of flow through the air inlet.

Preferably the fan comprises an impeller hub and a plurality of impeller blades. Preferably the barrier plate has a diameter greater than the diameter of the impeller hub. Preferably the diameter of the barrier plate is between 20% and 60% of the diameter of the air inlet, most preferably between 25% and 50%. Preferably the diameter is selected so that the barrier plate extends over the area of negative air velocity at the air inlet.

Preferably the barrier plate is positioned close to the impeller hub. Preferably the closest portion of the barrier plate is less than half the diameter of the barrier plate, preferably less than 200 mm, from the front face of the impeller hub.

Preferably the barrier plate and/or arms are formed of GRP and/or stainless steel.

Preferably the coolant is water.

An embodiment of the invention will now be described, by way of example only, with reference to the accompanying figures, where:
Fig. 1 is a schematic view of a water cooling tower of the sort to which the invention relates;
Fig. 2 is a transverse sectional view through the air inlet of a prior art water cooling tower;
Fig. 3 is an enlarged view of the impeller blade of the water cooling tower of Fig. 2;
Fig. 4 is an elevation on the air inlet of Fig. 2 in the direction of arrow A;
Fig. 5 is an elevation on the air inlet of Fig. 2 in the direction of arrow B;
Fig. 6 is a transverse sectional view through the air inlet of a water cooling tower according to the invention;
Fig. 7 is an elevation on the air inlet of Fig. 6 in the direction of arrow C;
Fig. 8 is an enlarged elevation on the barrier plate of Fig. 6 in the direction of arrow C;
Fig. 9 is a plan on the barrier plate of Fig. 8; and
Fig. 10 is a diagram of axial air velocity distribution in a cylindrical passage under the action of an axial fan.

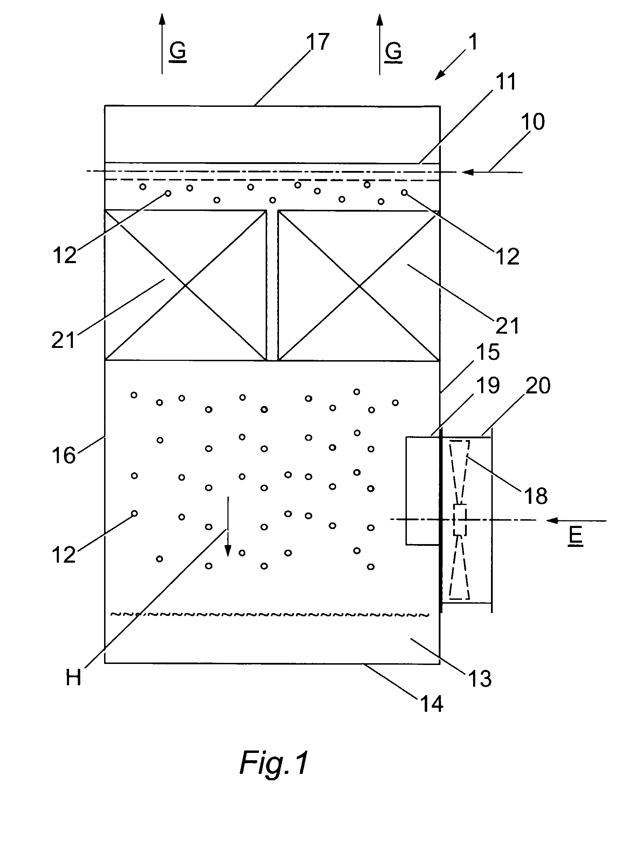

Referring to Fig. 1 there is shown a water cooling tower 1 having a coolant water inlet 10 connected to a spray distribution system 11. Water droplets 12 are released by the spray distribution pipes 11 and fall under gravity through cooling tower packing 21 towards a basetank 13, from where the coolant water is subsequently pumped. The packing 21 comprises a series of corrugated plates on which the droplets collect and fall, while allowing the passage of air between the corrugated plates. The tower 1 has a solid base 14 and solid walls 15,16 but is open at the top 17. In one wall 15 there is provided an axial fan 18 within a fan casing 20. Adjacent to the fan casing 20 there is provided a canopy or shedder 19, which diverts droplets away from the fan 18. Air is drawn through the fan casing 20 in the direction of arrow E into the cooling tower 1 and up out of the cooling tower opening 17 in the direction of arrows G. At the same time the water droplets 12 fall in the direction of arrow H and are cooled while passing along the plates of the packing 21 by the oncoming air. Typically the fans are between 600 mm and 1600 mm in diameter.

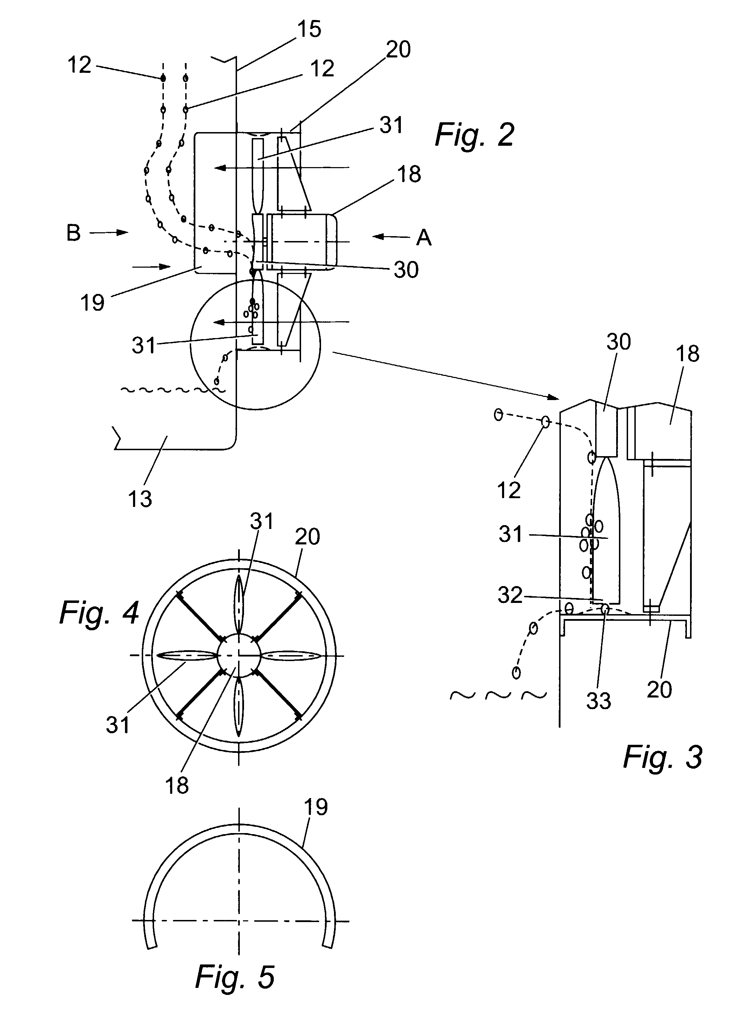

Fig. 10 shows how the air velocity immediately behind an axial fan 18 varies such that there is a negative velocity in the centre of the flow adjacent to the fan hub, ie an air flow towards the hub. This has the effect in prior art cooling towers, as illustrated in Figs. 2 to 5, that water droplets are pulled towards the hub 30 of the fan 18. The droplets then track along the impeller blades 31 under the action of centripetal force until they reach the tip 32 of the blade. Under cold conditions the droplets on the tip 32 and on the casing 20 can freeze, particularly when the fan 18 is not cycled on and off (which allows thawing cycles) but is run continuously. In this case the ice 33 so formed bonds the blade tip 32 to the fan casing 20, causing fan failure.

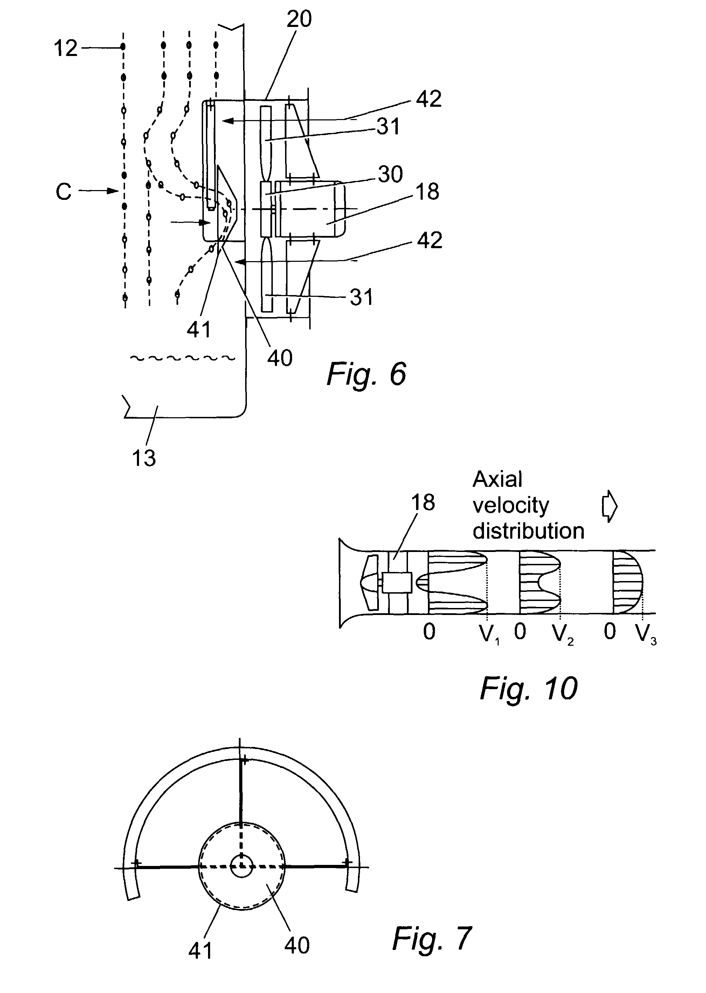

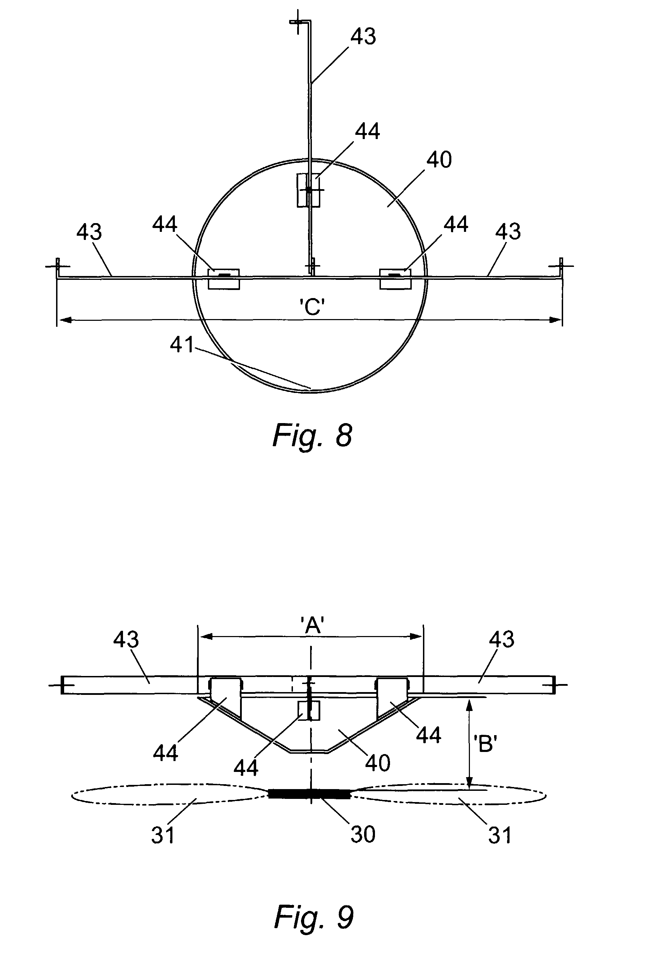

According to the invention, as shown in Figs. 6 to 9, a cone shaped barrier 40 is placed on the discharge side of the impeller 18. This prevents water droplets 12 from reaching the hub 30. The droplets 12 collect on the plate 40 and gravity causes them to run down to the bottom edge 41 where they collect until they are drawn off by the airstream 42 in a region of high air velocity and blown away from the fan 18 into the tower 1. In this way, the droplets 12 cannot reach the impeller blades 31, and there is no risk of freezing in winter.

The GRP cone 40 is held in place by 3 stainless steel arms 43 which are welded to lugs 44 which in turn are bonded by glassing to the cone 40. The far ends of the arms 43 are bolted to the canopy or shedder 19, which surrounds the upper part of the cone 40. Alternatively the arms 43 may be angled and fixed to the wall 15 of the cooling tower 1.

The diameter 'A' of the cone is selected to suit the fluid flow characteristics of the fan and fan casing. The cone may be replaced by a dish-like member or even a planar barrier plate, but a cone shape has been found to be the most efficient. Alternatively a bull-nose shape may be used. Below is a table of typical dimensions for the diameter 'A' of cone 40 and the dimension 'B' from the front face of the cone 40 to the front face of the hub 30, for different values of internal diameter 'C' of the fan housing 20.

| Fan diameter | 'A' | 'B' | 'C' |
|---|---|---|---|
| 60" | 650 mm | 224 mm | 1524 mm |
| 48" | 550 mm | 222 mm | 1220 mm |
| 38" | 450 mm | 200 mm | 965 mm |
| 1000 mm | 400 mm | 207 mm | 1000 mm |

Although the cone and arms are preferably GRP and stainless steel respectively, it is to be understood that other suitable corrosion-resistant materials may be used.

These and other modifications and improvements can be incorporated without departing from the scope of the invention.

## Claims

1. A cooling tower for cooling a liquid coolant, comprising a cooling chamber, an air inlet communicating with said cooling chamber, droplet generation means for generating droplets of liquid coolant within said chamber, and an axial fan comprising an axial impeller hub and a plurality of blades, said fan being adapted to draw air through said air inlet into said chamber, and said cooling tower further comprising a barrier plate positioned within the cooling tower substantially on the axis of the axial fan adjacent to the air inlet.

2. A cooling tower according to Claim 1, wherein said barrier plate is positioned centrally on the axis of said axial fan.

3. A cooling tower according to Claim 1 or 2, wherein said barrier plate is planar and positioned substantially perpendicularly to the axis of said axial fan.

4. A cooling tower according to Claim 1 or 2, wherein said barrier plate is dish shaped or cone shaped and positioned such that its axis of rotation is substantially perpendicular to the axis of said axial fan.

5. A cooling tower according to Claim 4, wherein the concave side of the dish or cone shape faces away from the fan.

6. A cooling tower according to Claim 4 or 5, wherein the barrier plate comprises a truncated cone subtending an angle of between 100° and 140°.

7. A cooling tower according to any preceding Claim, wherein the cooling tower is provided with a canopy adjacent to the air inlet and extending into said chamber over said barrier plate.

8. A cooling tower according to Claim 7, wherein the canopy comprises an arcuate portion of a cylinder subtending an arc greater than 180°.

9. A cooling tower according to Claim 7 or 8, wherein the barrier plate is fixed to the canopy by a plurality of fixing arms extending radially from the barrier plate.

10. A cooling tower according to Claim 9, wherein the arms comprise plate-like members arranged such that the planar side of the plate-like members is parallel to the direction of flow through the air inlet.

11. A cooling tower according to any preceding Claim, wherein the barrier plate is fixed to the cooling tower wall by a plurality of fixing arms.

12. A cooling tower according to any preceding Claim, wherein the diameter of the barrier plate is between 20% and 60% of the diameter of the air inlet.

13. A cooling tower according to any preceding Claim, wherein the diameter of the barrier plate is selected so that the barrier plate extends over the area of negative air velocity at the air inlet.

14. A cooling tower according to any preceding Claim, wherein the barrier plate has a diameter greater than the diameter of the impeller hub.

15. A cooling tower according to Claim 15, wherein the closest portion of the barrier plate is less than half the diameter of the barrier plate from the front face of the impeller hub.

16. A cooling tower according to any preceding Claim, wherein the barrier plate and/or arms are formed of glass reinforced plastic and/or stainless steel.

17. A cooling tower according to any preceding Claim, wherein the coolant is water.
